# EUROPÄISCHE PATENTSCHRIFT

(11) **EP 0 367 718 B1**
(45) Veröffentlichungstag und Bekanntmachung des Hinweises auf die Patenterteilung: **29.12.1993**
(21) Anmeldenummer: 89810775.0
(22) Anmeldetag: 11.10.1989
(51) Int. Cl.: E21B 10/36, E21B 10/44, B25D 17/06

(54) **Bohrwerkzeug**
Drilling tool
Outil de forage

(30) Priorität: 31.10.1988 DE 3836969
(43) Veröffentlichungstag der Anmeldung: 09.05.1990
(73) Patentinhaber: HILTI Aktiengesellschaft, 9494 Schaan (LI)
(72) Erfinder: Obermeier, Josef, D-8000 München 70 (DE)
(74) Vertreter: Wildi, Roland

(56) Entgegenhaltungen:
- DE-A- 2 726 214
- FR-A- 2 396 156

## Beschreibung

Die Erfindung betrifft ein Bohrwerkzeug für den Einsatz in Schläge abgebenden Antriebsgeräten, mit einem Arbeitsbereich, einer dem Arbeitsbereich abgewandten Schlagaufnahmefläche und einer am Grund einer Vertiefung angeordneten Bezugsfläche.

Bohrwerkzeuge, wie Gesteinsbohrer und dergleichen, verschleissen je nach Einsatzart unterschiedlich stark. Beispielsweise sind die Verschleissraten beim Einsatz in stark abrasivem Untergrund höher als in weniger abrasivem. Dessen ungeachtet muss dem Benutzer des Werkzeugs vom Verkäufer oder Hersteller eine von der Einsatzzeit abhängige Garantie auf angemessene Lebensdauer des Werkzeugs gegeben werden.

Aus der DE-PS 19 65 131 ist beispielsweise ein Werkzeug bekannt, dessen an den Bohrkopf anschliessender Bereich mit Wendeln eine in die Aussenkontur eingeformte Vertiefung aufweist. Die Vertiefung nimmt im Zuge des Bohreinsatzes verschleissbedingt ab. Eine noch vorhandene Vertiefung wird als Merkmal für noch vorhandene Garantieansprüche angesehen.

Diese Art der Anzeige des Benutzungsgrades ist jedoch für eine von der Einsatzzeit abhängige Erfassung nicht geeignet, da der Abbau der im Bohrloch verschleissenden Vertiefung je nach Art des Untergrundes stark schwankt. Es wäre somit allenfalls nur möglich, zeitbezogene Ansprüche auf Garantieleistung durch entsprechend genaue Untersuchung des Werkzeuges nachzuweisen. Dies erfordert einen entsprechenden apparativen Aufwand, wobei das Werkzeug von der Einsatzstelle abgezogen und zu einer entsprechenden Kontrollstätte gebracht werden muss. Dieser Aufwand ist sowohl für den Benutzer als auch für den Verkäufer bzw Hersteller nachteilig.

Der Erfindung liegt die Aufgabe zugrunde, ein Schläge aufnehmendes Bohrwerkzeug zu schaffen, das die Beurteilung der zeitabhängigen Fälligkeit des Garantieanspruches an Ort und Stelle ohne gesonderten apparativen Aufwand ermöglicht.

Erfindungsgemäss wird die Aufgabe dadurch gelöst, dass die Bezugsfläche zum Arbeitsbereich hin im Abstand von der Schlagaufnahmefläche angeordnet ist, wobei der Abstand dem 0,02 - bis 0,1-fachen des Durchmessers der Schlagaufnahmefläche entspricht. Im Arbeitseinsatz des Werkzeugs, beispielsweise bei Verwendung in einem sogenannten Bohrhammer, beaufschlagt ein kolbenartiger Schläger in rascher Aufeinanderfolge die Schlagaufnahmefläche, welche fortlaufend abgetragen wird und dadurch sich der Bezugsfläche nähert, bis beide Flächen letztlich auf gleicher Höhe liegen. Dieser nach einer vorgegebenen Anzahl Schläge und damit nach vorgegebener Einsatzzeit eintretende Zustand ist ohne Hilfsmittel optisch an Ort und Stelle erkennbar. Tritt demnach eine von der Schadensart her gesehen unter Garantie fallende Beeinträchtigung des Werkzeuges auf, bevor die Schlagaufnahmefläche auf Höhe der Bezugsfläche liegt, so kann der Garantieanspruch geltend gemacht werden, da die garantierte Einsatzzeit noch nicht erbracht ist. Bei gleicher Höhe beider Flächen ist der Garantieanspruch hingegen wegen zu langer Einsatzzeit erloschen.

Je nach Härte des Materials des Werkzeugs oder Grösse der Vertiefung wird die Tiefe nach unten oder oben in diesem Massbereich liegen. Die Vertiefung kann spanabhebend oder spanlos durch Einprägen erstellt werden.

Die am Grund der Vertiefung angeordnete Bezugsfläche hat dabei zweckmässig eine Flächenerstreckung, die maximal 10 % der Erstreckung der Schlagaufnahmefläche entspricht. Die Vertiefung schützt die Bezugsfläche vor Beschädigung, so dass eine zuverlässige Anzeige des für die Garantieleistung massgeblichen Verschleisszustandes der Schlagaufnahmefläche gegenüber der Bezugsfläche gewährleistet ist.

Mit Vorteil ist die Vertiefung als Kerbe ausgebildet. Durch eine im Inneren der Schlagaufnahmefläche angeordnete Kerbe wird eine minimale Reduzierung der Schlagaufnahmefläche erreicht, was verschleissmindernd wirkt. Diese Ausbildung kommt deshalb insbesondere bei Werkzeugen kleinen Durchmessers in Betracht. Anstelle einer Kerbe können auch mehrere Kerben vorgesehen sein.

Nach einer weiteren Ausführungsform ist die Vertiefung ringförmig ausgebildet. Die ringförmige Vertiefung kann konzentrisch zur Werkzeugachse, wiederum in Inneren der Schlagaufnahmefläche oder die Schlagaufnahmefläche umlaufend, angeordnet sein. Vorteilhaft ist bei dieser Ausführung eine rotationssymmetrische Anordnung zur Schlagaufnahmefläche.

Die Vertiefung weist zweckmässig eine unter einem flachen Winkel von vorzugsweise 20 - 40° zur Schlagaufnahmefläche geneigte Wandung auf. Der Grad des Abbaues der Vertiefung wird so besonders deutlich erkennbar, da die Wandung aufgrund der erwähnten Neigung entsprechend dem Abbauen der Vertiefung in der Axialprojektion sich verstärkt verkürzt.

Die Erfingung wird nachstehend anhand von Zeichnungen, die Ausführungsbeispiele wiedergeben, näher erläutert. Es zeigen:
- Fig. 1: ein Bohrwerkzeug in verkürzter Darstellung;
- Fig. 2: einen Grundriss des Werkzeuges nach Fig. 1;
- Fig. 3: eine weitere Ausführungsform eines teilweise dargestellten Bohrwerkzeuges;
- Fig. 4: einen Grundriss des Werkzeuges nach Fig. 3.

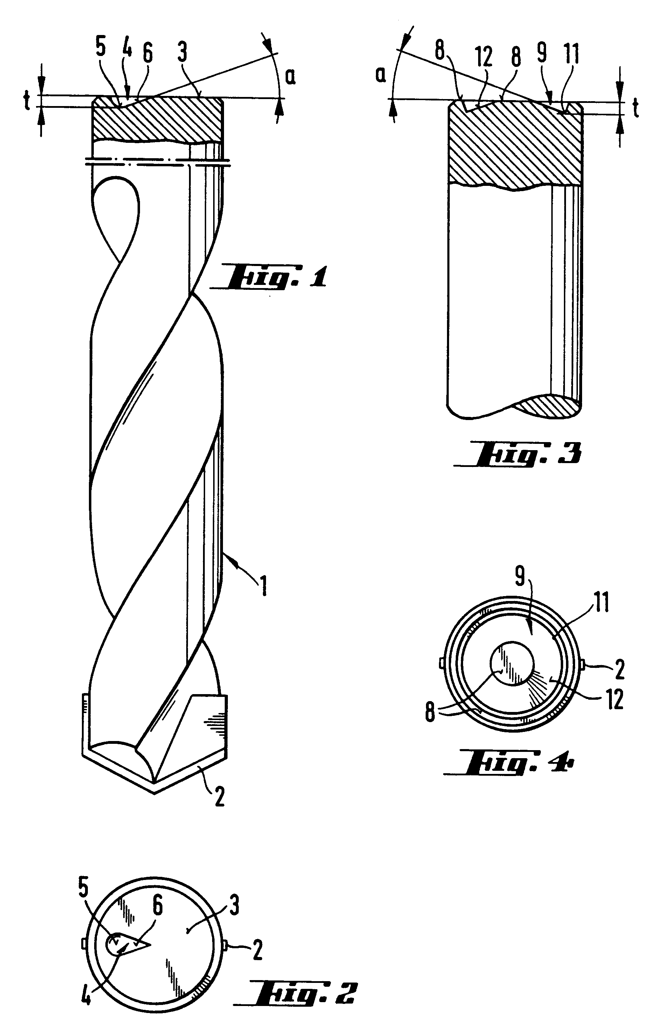

Das Bohrwerkzeug nach Fig. 1 ist als Gesteinsbohrer ausgebildet. Dieser weist einen Arbeitsbereich 1 mit wendelförmigen Abführnuten und eine endseitig angeordnete Hartmetallplatte 2 auf. Das der Hartmetallplatte 2 abgewandte Ende des Werkzeugs ist durch eine plane Schlagaufnahmefläche 3 gebildet. In die Schagaufnahmefläche 3 ist eine als Kerbe 4 ausgebildete Vertiefung eingebracht. Der Grund der Kerbe 4 bildet eine Bezugsfläche 5, welche um einen Abstand t von der Schlagaufnahmefläche 3 zum Arbeitsbereich 1 hin versetzt ist. Im Grundriss weist die Kerbe zweckmässig eine tropfenförmige Kontur auf. Eine Wandung 6 der Kerbe 4 ist unter einem flachen Winkel a zur Schlagaufnahmefläche 3 geneigt.

Bei der Ausführungsform eines Bohrwerkzeugs gemäss Fig. 3 und 4 ist wiederum eine Schlagaufnahmefläche 8 vorgesehen, in die eine ringförmige Vertiefung 9 mit einer Bezugsfläche 11 und einer im Winkel a zur Schlagaufnahmefläche 8 geneigten Wandung 12 eingeformt ist.

Im Arbeitseinsatz der Bohrwerkzeuge wird die Schlagaufnahmefläche 3, 8 aufeinanderfolgend von einem Schläger eines Antriebsgerätes, beispielsweise eines Bohrhammers, beaufschlagt. Dadurch wird die Kerbe 4 oder die Vertiefung 9, abhängig von der Dauer des Arbeitseinsatzes, allmählich eingeebnet. Die Zeitdauer bis die Kerbe 4 oder die Vertiefung 9 völlig eingeebnet ist dient für den Benützer des Werkzeugs als Vorgabe zur Geltendmachung von Garantieansprüchen. Treten demnach am Werkzeug an sich unter Garantie fallende Beschädigungen auf, bevor die Kerbe 4 oder die Vertiefung 9 völlig eingeebnet ist, besteht Anspruch auf Garantieleistung, bei völlig eingeebneter Kerbe 4 oder Vertiefung 9 hingegen nicht. Diese optische Beurteilung des Garantiefalles ist vor Ort, also beispielsweise an der Baustelle, ohne jegliche Hilfsmittel möglich.

## Patentansprüche

1. Bohrwerkzeug für den Einsatz in Schläge abgebenden Antriebsgeräten, mit einem Arbeitsbereich (1), einer dem Arbeitsbereich (1) abgewandten Schlagaufnahmefläche (3, 8) und einer am Grund einer Vertiefung (4, 9) angeordneten Bezugsfläche (5, 11), dadurch gekennzeichnet, dass die Bezugsfläche (5, 11) zum Arbeitsbereich (1) hin im Abstand (t) von der Schlagaufnahmefläche (3, 8) angeordnet ist, wobei der Abstand (t) dem 0,02- bis 0,1-fachen des Durchmessers der Schlagaufnahmefläche (3, 8) entspricht.

2. Bohrwerkzeug nach Anspruch 1, dadurch gekennzeichnet, dass die Vertiefung (4) als Kerbe ausgebildet ist.

3. Bohrwerkzeug nach Anspruch 1 oder 2, dadurch gekennzeichnet, dass die Vertiefung (9) ringförmig ausgebildet ist.

4. Bohrwerkzeug nach einem der Ansprüche 1 bis 3, dadurch gekennzeichnet, dass die Vertiefung (4, 9) eine unter einem flachen Winkel (a) von vorzugsweise 20° bis 40° zur Schlagaufnahmefläche (3, 8) geneigte Wandung (6) aufweist.

## Claims

1. Drill for use with percussion drives, having one work area (1), a percussion receiving surface (3, 8) which is facing away from the work area (1) and a reference surface (5, 11) which is arranged at the bottom of a recess (4, 9), **characterised in that** the reference surface (5, 11) is arranged towards the work area (1) at the distance (t) from the percussion receiving surface (3, 8), wherein the distance (t) equals between 0.02 and 0.1 times the diameter of the percussion receiving surface (3, 8).

2. Drill according to claim 1, **characterised in that** the recess (4) is arranged to be a notch.

3. Drill according to claim 1 or 2, **characterised in that** the recess (9) is arranged to be circular.

4. Drill according to one of claims 1 to 3, **characterised in that** the recess (4, 9) has a wall (6) which is slanted at a flat angle (a) of preferably between 20° and 40° relative to the percussion receiving surface (3, 8).

## Revendications

1. Outil de forage utilisable dans des appareils d'entraînement à percussion, avec une zone de travail (1), une surface recevant les chocs de percussion (3,8) disposée à l'opposé de la zone de travail (1) et une surface de référence (5, 11) disposée au fond d'un renfoncement (4, 9), caractérisé en ce que la surface de référence (5, 11) est disposée en direction de la zone de travail (1) à une distance (t) de la surface recevant les chocs de percussion (3, 8), la distance (t) correspondant à 0,02- à 0,1- fois le diamètre de la surface recevant les chocs de percussion (3, 8).

2. Outil de forage selon la revendication 1, caractérisé en ce que le renfoncement (4) est réalisé sous forme d'encoche.

3. Outil de forage selon la revendication 1 ou 2, caractérisé en ce que le renfoncement (9) présente une forme annulaire.

4. Outil de forage selon l'une des revendications 1 à 3, caractérisé en ce que le renfoncement (4, 9) présente une paroi (6) inclinée d'un angle faible (a), de préférence de 20° à 40°, par rapport à la surface recevant les chocs de percussion (3, 8).
